# EUROPEAN PATENT APPLICATION

(11) **EP 2 799 281 A1**
(43) Date of publication of application: **05.11.2014**
(21) Application number: 12862958.1
(22) Date of filing: 26.12.2012
(51) Int. Cl.: B60N 2/58, A47C 31/02

(54) **SEAT FOR VEHICLE**

(30) Priority: 27.12.2011 JP 2011286050
(71) Applicant: TS Tech Co., Ltd., Asaka-shi, Saitama 351-0012 (JP)
(72) Inventor: KIKUCHI, Kenta, Shioya-gun, Tochigi 329-1217 (JP)
(74) Representative: Grünecker, Kinkeldey, Stockmair & Schwanhäusser
(86) International application number: PCT/JP2012/083712
(87) International publication number: WO 2013/099976

(57) **Abstract**

In a structure in which a skin material is attached by hooking a hook provided in a terminal end of the skin material to a wire attached to a seat frame, a state where the hook is hooked to the wire is satisfactorily maintained. In a vehicle seat including a trim cover 7 covering a cushion material 5 and a seat back frame 16 including an attachment wire 37 for attaching the trim cover 7 thereto, the attachment wire 37 includes a first wire portion 38 to which a trim code 8a provided at one end side of the trim cover 7 is hooked, a second wire portion 39 to which a trim code 8b provided at other end side of a trim cover 7 is hooked, and a connection wire 40 which connects the first wire portion 38 and the second wire portion 39 to each other in a width direction of the seat.

## Description

### Technical Field

The present invention relates to a vehicle seat, and particularly, to a vehicle seat including a skin material covering a cushion material and a frame including a skin material attachment portion formed to attach a skin material thereto.

### Background Art

A vehicle seat which is formed by covering a cushion material using a skin material is already known. As such a vehicle seat, a skin material attachment portion used to attach the skin material thereto may be provided in a seat frame (for example, see Patent Document 1). In the seat disclosed in Patent Document 1, a wire frame as the skin material attachment portion is provided in a cushion frame and a hook (a trim code) provided in a terminal end of the skin material is hooked to the wire frame so that the skin material is attached to the seat.

### CITATION LIST

### Patent Document

Patent Document 1: JP 2000-157375 A

### SUMMARY OF THE INVENTION

### Problem to be Solved by the Invention

Incidentally, in the configuration in which the wire is used as the skin material attachment portion as in the seat disclosed in Patent Document 1, the skin material attachment state becomes poor if the state where the hook is hooked to the wire may not be stabilized, and hence there is a concern that the appearance of the vehicle seat may be noticeably damaged.

Therefore, the present invention is made in view of the above-described circumstances, and an object thereof is to provide a vehicle seat capable of satisfactorily maintaining the state where a hook is hooked to a wire in a structure in which a skin material is attached by hooking the hook such as a trim code provided at a terminal end of the skin material to the wire attached to a seat frame.

### Means for Solving Problem

According to a vehicle seat of the present invention, the above-described problem is solved by a vehicle seat including: a skin material that covers a cushion material; and a frame that includes a skin material attachment portion formed to attach the skin material thereto, wherein the skin material attachment portion includes a first wire portion to which a hook provided in the skin material is hooked when the skin material is attached to the skin material attachment portion, a second wire portion which is located at a position separated from the first wire portion in a width direction of the vehicle seat and to which the other hook provided in the skin material is hooked when the skin material is attached to the skin material attachment portion, and a connection wire portion that connects the first wire portion and the second wire portion to each other in the width direction.

In the above-described vehicle seat, since the first wire portion and the second wire portion are connected by the connection wire portion, each of the rigidity thereof is improved. Accordingly, the deformation of the wire portions hardly occurs even when the hook is hooked to each of the wire portions, and hence the state where the hook is hooked may be satisfactorily maintained.

Further, in the above-described vehicle seat, the connection wire portion may connect a portion other than a first hook portion to which the hook is hooked in the first wire portion to a portion other than a second hook portion to which the other hook is hooked in the second wire portion.

In the vehicle seat with the above-described configuration, since the interference with the connection wire portion when the hook is hooked to the wire portion may be suppressed, the workability is improved.

Further, in the above-described vehicle seat, the frame may include a pair of side frames that is disposed while being separated from each other in the width direction, the first wire portion may be welded to one side frame of the pair of side frames, the second wire portion may be welded to other side frame of the pair of side frames, and the connection wire portion may connect a first welding portion welded to the one side frame in the first wire portion to a second welding portion welded to the other side frame in the second wire portion.

In the vehicle seat with the above-described configuration, the rigidity in the periphery of the welding portion of the wire portion in the side frame is improved, and hence each of the wire portions may be satisfactorily supported by the side frames.

Further, in the above-described vehicle seat, the first welding portion may be located at a region facing the other side frame in the one side frame in the width direction, and the second welding portion may be located at a region facing the one side frame in the other side frame in the width direction.

In the vehicle seat with the above-described configuration, since each of the welding portions are located at the inside of the side frames, the distance between the welding potions is shortened compared to the case where each of the welding portions are located at the outside of the side frames, and hence the length of the connection wire portion may be further shortened. That is, the skin material attachment portion may be provided in a compact size by the above-described configuration.

Further, in the above-described vehicle seat, in the state where the vehicle seat is attached to a main vehicle body, the first hook portion to which the hook is hooked in the first wire portion and the second hook portion to which the other hook is hooked in the second wire portion may be located below the connection wire portion.

In the vehicle seat with the above-described configuration, since each of the hook portions of the wire portions may easily access, the operation of hooking the hook to the hook portion (that is, the skin material attachment operation) may be more easily performed.

### EFFECTS OF THE INVENTION

According to the present invention, since the first wire portion and the second wire portion are connected by the connection wire portion, each of the rigidity thereof is improved. Accordingly, the deformation of the wire portions hardly occurs even when the hook is hooked to each of the wire portions, and hence the state where the hook is hooked may be satisfactorily maintained.

According to the present invention, since the interference with the connection wire portion when the hook is hooked to the wire portion may be suppressed, the workability is improved.

According to the present invention, the rigidity in the periphery of the welding portion of the wire portion in the side frame is improved, and hence each of the wire portions may be satisfactorily supported by the side frames.

According to the present invention, since each of the welding portions are located at the inside of the side frames, the distance between the welding potions is shortened compared to the case where each of the welding portions are located at the outside of the side frames, and hence the length of the connection wire portion may be further shortened. Accordingly, the skin material attachment portion may be provided in a compact size.

According to the present invention, since each of the hook portions of the wire portions may easily access, the operation of hooking the hook to the hook portion (that is, the skin material attachment operation) may be more easily performed.

### BRIEF DESCRIPTION OF THE DRAWINGS

Fig. 1 is a perspective view of a vehicle seat according to this embodiment.
Fig. 2 is a view illustrating the inner structure of the vehicle seat according to this embodiment.
Fig. 3 is a view obtained when a frame according to this embodiment is seen from the upside.
Fig. 4 is a front view of the frame according to this embodiment.
Fig. 5 is an enlarged view of a range X of Fig. 3.
Fig. 6 is a view illustrating a first wire portion, a second wire portion, and a connection wire portion according to this embodiment.
Fig. 7 is a schematic view illustrating a state where a skin material according to this embodiment is attached.

### DESCRIPTION OF EMBODIMENT

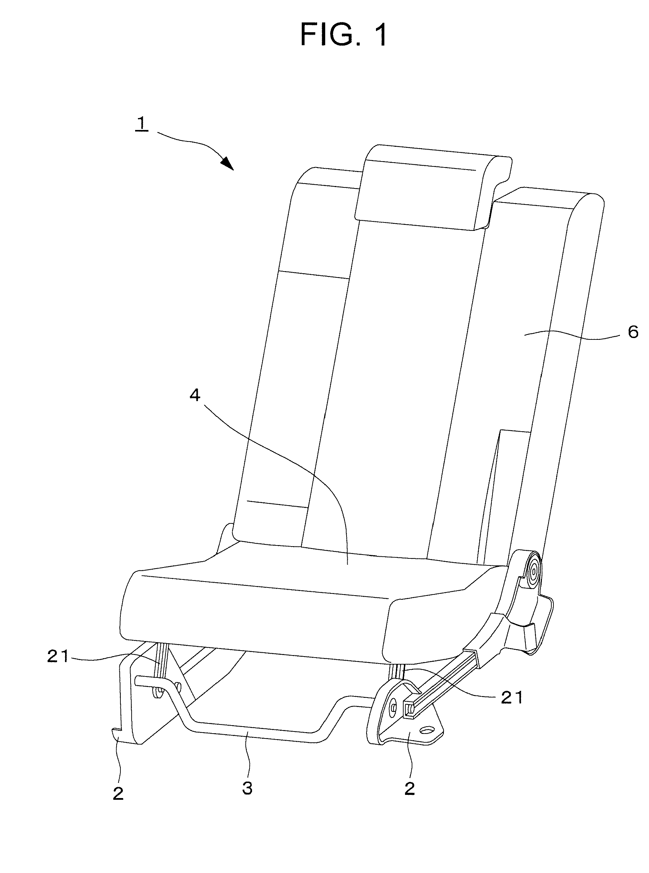

Hereinafter, an embodiment (hereinafter, referred to as this embodiment) of the present invention will be described with reference to Figs. 1 to 7.

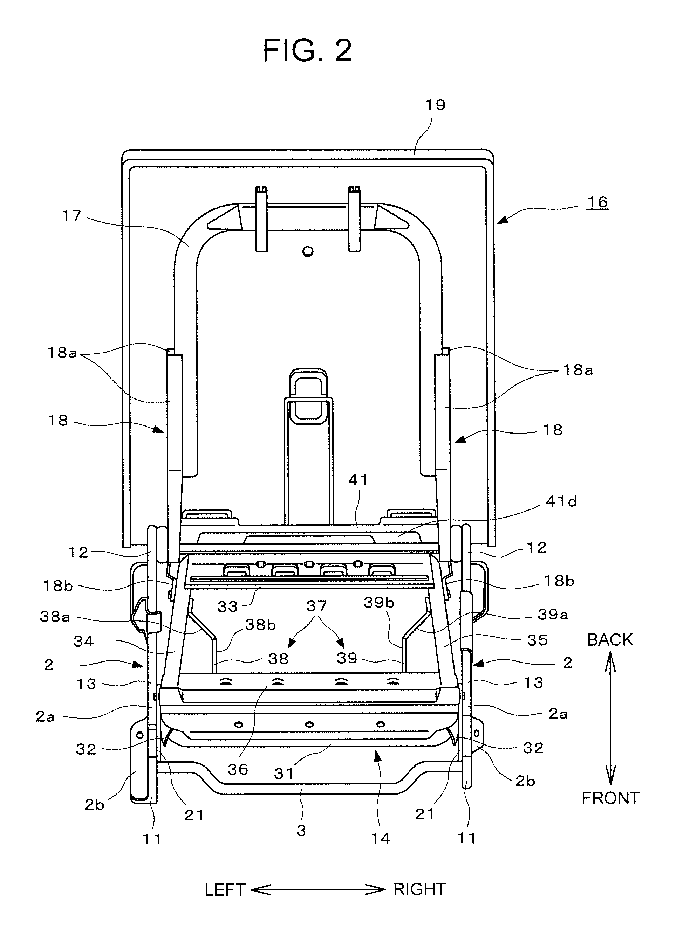

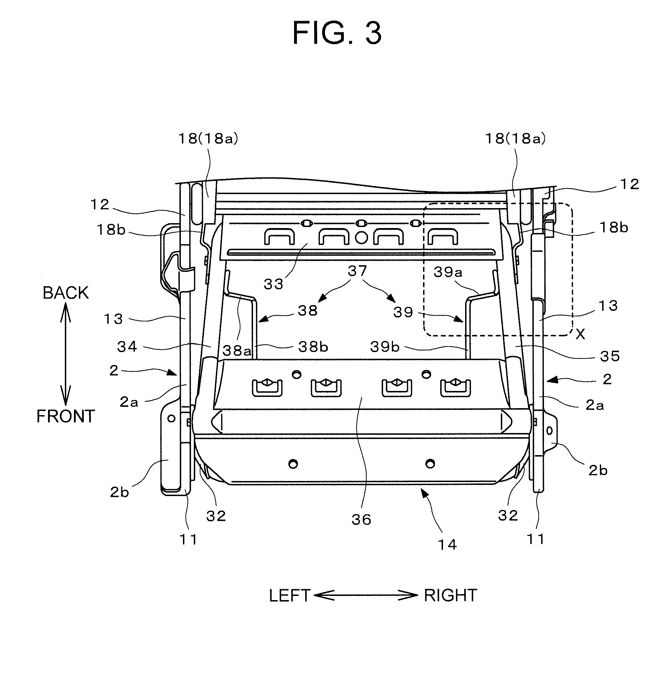

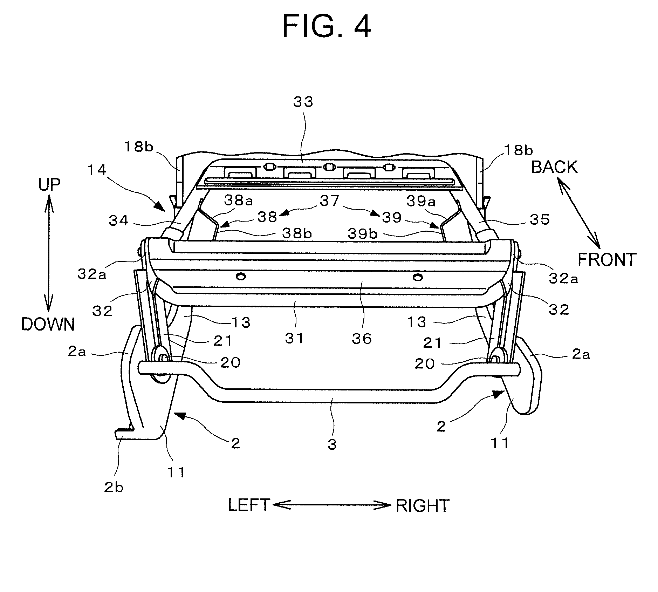

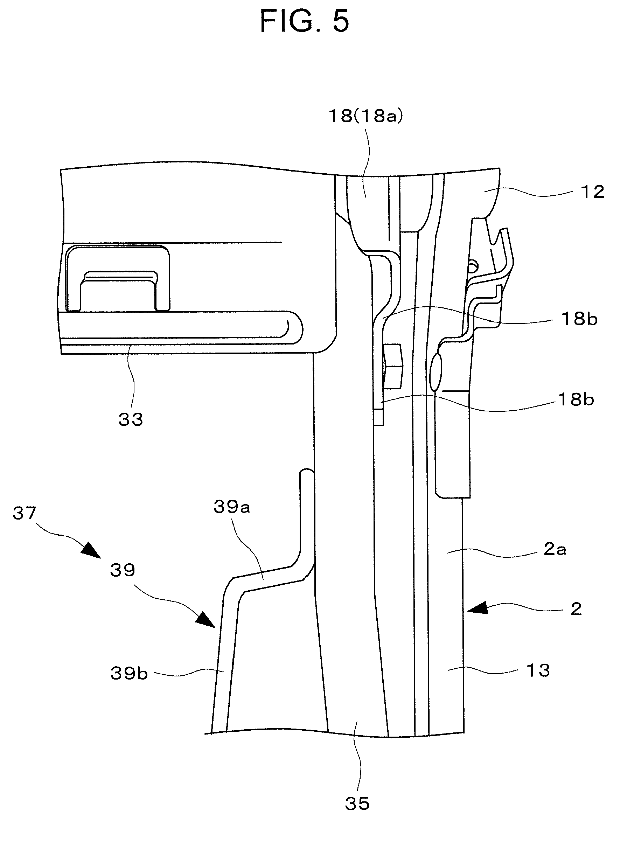

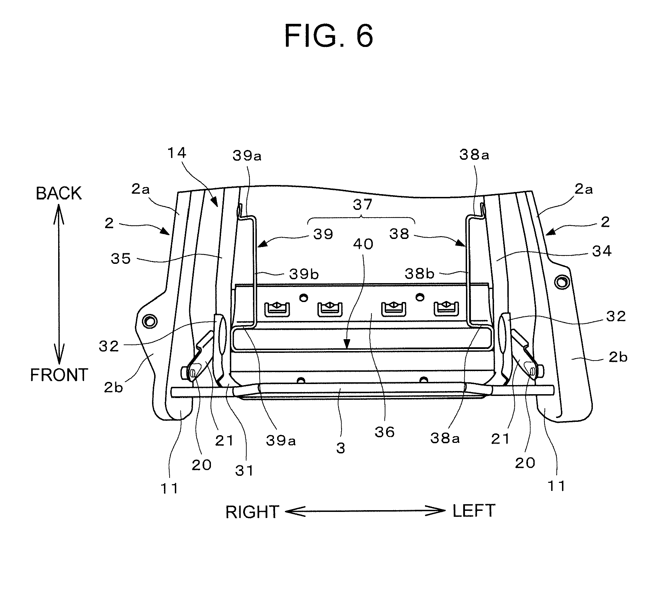

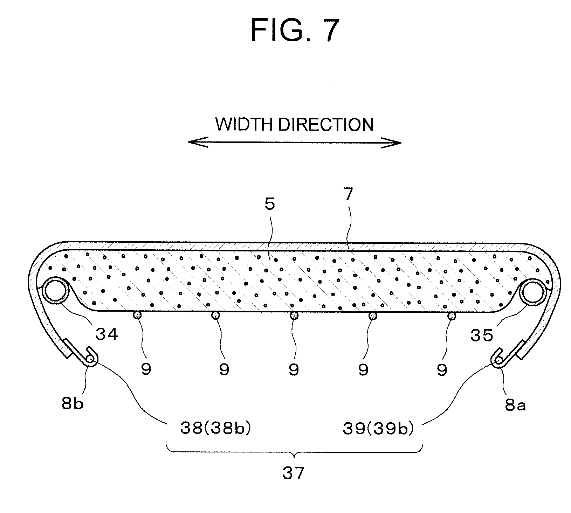

Fig. 1 is a perspective view of a vehicle seat according to this embodiment. Fig. 2 is a view illustrating the inner structure of the vehicle seat according to this embodiment. Fig. 3 is a view obtained when a frame according to this embodiment is seen from the upside. Fig. 4 is a front view of the frame according to this embodiment. Fig. 5 is an enlarged view of a range X of Fig. 3. Fig. 6 is a view illustrating a first wire portion, a second wire portion, and a connection wire portion according to this embodiment, and is a view obtained when the frame according to this embodiment is seen from the downside. Fig. 7 is a schematic view illustrating a state where a skin material according to this embodiment is attached.

In the description below, the front to back direction of the vehicle (the vehicle seat) indicates the direction matching the traveling direction when the vehicle travels normally. Further, the width direction of the vehicle

(the vehicle seat) indicates the right and left direction when the vehicle (the vehicle seat) is seen from the front side thereof. Further, in the description below, the up and down direction indicates the up and down direction when the vehicle is located on a flat surface.

### «Entire Configuration of Vehicle Seat according to This Embodiment»

First, the entire configuration of the vehicle seat (hereinafter, referred to as a seat 1) according to this embodiment will be described.

The seat 1 is a foldable seat, becomes a posture in which an occupant may sit on the seat in a use state, and becomes a folded posture in a non-use state.

Specifically, the seat 1 includes a seat cushion 4 and a seat back 6 as illustrated in Fig. 1. When the seat back 6 is laid forward from the standing state, the seat cushion 4 swings backward and downward in synchronization with this movement. Then, when the seat cushion 4 reaches the lower end and the rear end of the swing range, the seat back 6 is folded on the seat cushion 4. Such a state is a state (a non-use state) where the seat 1 is stowed.

Meanwhile, when the seat back 6 is returned from the laid state to the standing state, the seat cushion 4 swings forward and upward in synchronization with this movement. Then, when the seat cushion 4 reaches the upper end and the front end of the swing range, the seat cushion 4 is located slightly above a vehicle body floor, and hence the seat back 6 stands so as to be substantially perpendicular to the seat cushion 4. Such a state is a state (a use state) where an occupant may sit on the seat 1.

Further, the seat 1 includes a pair of right and left support brackets 2 and 2, and is fixed to a vehicle body through the support brackets 2 and 2. That is, the pair of right and left support brackets 2 and 2 is a portion which is formed so as to fix the seat 1 to the vehicle body. In this embodiment, the support brackets are formed by performing a pressing work on a metal sheet. Furthermore, in this embodiment, the support brackets 2 and 2 are fixed to the vehicle body while being located at both sides of the seat cushion 4.

Here, the structures of each of the support brackets 2 and 2 will be described with reference to Figs. 2 to 4, and each of the support brackets 2 and 2 are formed by connecting and matching a plurality of segments. In this embodiment, the support bracket includes a front end 11, a rear end 12, and an intermediate portion 13 which connects between the front end 11 and the rear end 12. In other words, each of the support brackets 2 and 2 may be divided into three segments of the front end 11, the rear end 12, and the intermediate portion 13.

The respective segments (that is, the front end 11, the rear end 12, and the intermediate portion 13) of the support brackets 2 and 2 are provided so as to be substantially perpendicular to the vehicle body floor. Furthermore, in this embodiment, a flared portion 2a which is projected outward is formed in the substantially entire circumference of the support brackets 2 and 2, and the rigidity of the support brackets 2 and 2 is ensured by forming such flared portions 2a.

The rear end 12 of each of the support brackets 2 and 2 is attached to the lower end of the seat back 6 (precisely, a frame (a seat back frame) 16 of the seat back 6). More specifically, the seat back 6 is supported by the support brackets 2 and 2 while being rotatable so as to reciprocate between the standing position (the position where the seat 1 is in a sittable state) and the laid position (the position where the seat 1 is in a stowable state) as described above.

As illustrated in Fig. 3, the front ends 11 of each of the support brackets 2 and 2 are portions which support the seat cushion 4 through rotation arms 21 and 21. Further, a substantially horizontal base wall 2b is adjacent to the lower end of the front end 11, and when such a base wall 2b is connected to the vehicle body floor by a bolt, the support brackets 2 and 2 is fixed to the vehicle body. As a result, the seat 1 is fixed to the vehicle body floor.

Further, in this embodiment, a connection pipe 3 which connects the front ends 11 of the support brackets 2 and 2 to each other is provided so as to suppress the support brackets 2 and 2 from falling inward (that is, toward the support brackets 2 and 2 which make a pair).

Next, the seat cushion 4 and the peripheral components will be described with reference to Figs. 2 to 5. The seat cushion 4 is disposed at a position interposed between the support brackets 2 and 2 in the width direction of the vehicle and includes a seat cushion frame 14 which serves as a frame. The seat cushion frame 14 includes a seat cushion frame base 31, front brackets 32 and 32, and a rear bracket 33. The seat cushion frame base 31 is formed as a pipe which is bent in a substantially U-shape, the left end thereof is provided with a left end frame 34, and the right end thereof is provided with a right end frame 35. Here, the left end frame 34 and the right end frame 35 correspond to a pair of side frames which are disposed while being separated from each other in the width direction of the seat 1. That is, the left end frame 34 corresponds to one side frame of the above-described pair of side frames, and the right end frame 35 corresponds to the other side frame of the above-described pair of side frames.

The front brackets 32 and 32 are respectively welded to the front portions of the outer surfaces of the left end frame 34 and the right end frame 35. Each of the front brackets 32 and 32 includes a bulge portion 32a which bulges upward, and one-side longitudinal ends of the rotation arms 21 and 21 to be described later are fixed to the bulge portions 32a.

The rear bracket 33 is disposed between the rear end of the left end frame 34 and the rear end of the right end frame 35 in the width direction of the seat 1.

Further, a seat cushion pan 36 is provided in the front end of the seat cushion frame 14 from the left front bracket 32 to the right front bracket 32, S springs 9 are provided between the rear end of the seat cushion pan 36 and the rear bracket 33, and a cushion material 5 of the seat cushion 4 is placed on the S springs 9 (see Fig. 7).

Furthermore, the front end of the seat cushion pan 36 is hooked to the front end of the seat cushion frame base 31. Specifically, the front end of the seat cushion pan is curved in a circular-arc shape so as to be hooked to the front end of the seat cushion frame base 31. Meanwhile, the front end of the seat cushion pan 36 is not hooked to a position where a pipe forming the seat cushion frame base 31 is bent, that is, a position corresponding to the front corner of the seat cushion 4. This is because the occupant may feel uncomfortable when the occupant sits on the seat 1 in the case where the seat cushion pan 36 is hooked to the position corresponding to the front corner of the seat cushion 4. With the above-described configuration, the uncomfortable feeling may be suppressed.

Further, an attachment wire 37, to which trim codes 8a and 8b attached to a terminal end of a trim cover 7 covering the above-described cushion material 5 is hooked, is provided at the inside of the seat cushion frame base 31 (specifically, a position between the left end frame 34 and the right end frame 35 of the seat cushion frame base 31) (for example, see Fig. 7).

Meanwhile, the rotation arms 21 and 21, which are rotatable around the rotation shaft along the width direction of the vehicle, are provided as a pair of right and left rotation arms in the periphery of the seat cushion frame 14. As described above, the seat cushion frame 14 (specifically, the bulge portions 32a of the front brackets 32 and 32) is fixed to one-side longitudinal ends of each of the rotation arms 21 and 21. As a result, the seat cushion frame 14 swings in synchronization with the rotation of the rotation arms 21 and 21. That is, when the rotation arms 21 and 21 rotate, the seat cushion 4 swings in accordance with the rotation.

The configurations of the rotation arms 21 and 21 will be described with reference to Fig. 4. As described above, one-side longitudinal ends of the rotation arms 21 and 21 are fixed to the bulge portions 32a of the front brackets 32 and 32 by bolts. The other-side longitudinal ends of the rotation arms 21 and 21 are rotatbly supported by the front ends 11 of the support brackets 2 and 2 through fixed pivots 20 and 20 as the rotation shafts. Thus, each of the rotation arms 21 and 21 are rotatable in the front to back direction and the up and down direction, and hence the seat cushion 4 swings in the same direction in accordance with the rotation.

When the seat cushion 4 reaches the front end and the upper end of the swing range, the seat cushion is located slightly above the vehicle body floor, and hence the occupant may sit on the seat cushion at such a position. That is, the position of the front end and the upper end of the swing range of the seat cushion 4 corresponds to the sitting position of the seat cushion 4. Furthermore, in the state where the seat cushion 4 is located at the sitting position, the rotation arms 21 and 21 are slightly inclined backward with respect to the perpendicular direction, and hence the seat cushion 4 takes a posture in which the front end of the seat cushion is raised in relation to the rear end thereof.

On the other hand, when the seat cushion 4 reaches the rear end and the lower end of the swing range, the seat cushion is stowed so as to approach the vehicle body floor. That is, the positions of the rear end and the lower end of the swing range of the seat cushion 4 correspond to the stowing position of the seat cushion 4. Furthermore, the stowing position is located below the sitting position. In the state where the seat cushion 4 is located at the stowing position, the rotation arms 21 and 21 and the seat cushion frame 14 are substantially horizontal.

Next, the seat back 6 will be described with reference to Fig. 2. Furthermore, in the description below, the up and down direction of the seat back 6 indicates the up and down direction when the seat back 6 is in the standing state (that is, the seat 1 is in the use state). Similarly, the front to back direction of the seat back 6 indicates the front to back direction when the seat back 6 is in the standing state.

The seat back 6 is connected to the rear end of the seat cushion 4 and includes a seat back frame 16 which serves as a frame. The seat back frame 16 includes a seat back frame base 17, a pair of right and left side frames 18 and 18, and a back pan frame 19. The seat back frame base 17 is formed as a pipe which is bent in a substantially downward U-shape. The side frames 18 and 18 are respectively welded to the left end and the right end of the seat back frame base 17.

Further, each of the side frames 18 and 18 includes a flared portion 18a which is formed by bending the front end and the rear end thereof so that the flared portion is projected inward (toward the side frames 18 which make a pair). Since such flared portions 18a are formed, the rigidity of the side frames 18 and 18 is ensured. Further, bulge portions 18b which bulge forward are formed at the lower ends of the side frames 18 and 18, and the bulge portions 18b engage with the outer surfaces of the corresponding frames of the left end frame 34 and the right end frame 35.

Furthermore, a connection bracket 41 which connects the rear ends of the lower ends of the side frames 18 and 18 (more specifically, the rear-end-side flared portions 18a) to each other is provided between the side frames 18 and 18.

The back pan frame 19 is formed as a rectangular metal panel, and is welded to the rear end of the seat back frame base 17 and the rear ends of the side frames 18 and 18. The width of the back pan frame 19 (the length in the right and left direction) is larger than the width of the seat cushion frame 14 by one size. Then, in the state where the seat 1 is folded, the entire seat cushion 4 is slid below the back pan frame 19.

### «Configuration of Skin Material Attachment Portion according to This Embodiment»

Next, the configuration of the skin material attachment structure according to this embodiment will be described with reference to Figs. 6 and 7. Furthermore, in the description below, the trim cover 7 which covers the cushion material 5 of the seat cushion 4 is exemplified as an example of the skin material, and a skin material attachment portion which is formed to attach the trim cover 7 will be described.

As described already, the seat cushion frame 14 includes the attachment wire 37 which is used to attach the trim cover 7. The attachment wire 37 corresponds to the skin material attachment portion of the present invention, and is provided between the left end frame 34 and the right end frame 35 of the seat cushion frame base 31 in the width direction of the seat 1 as described above in this embodiment.

As described above, the seat 1 includes the trim cover 7 which serves as a skin material for covering the cushion material 5 and the seat cushion frame 14 which serves as a frame including the attachment wire 37 (the skin material attachment portion) provided to attach the trim cover 7 thereto.

The attachment wire 37 will be described in detail with reference to Fig. 6. The attachment wire 37 includes a first wire portion 38 which is located at one end side (the left side) in the width direction of the seat 1, a second wire portion 39 which is located at the other end side (the right side) in the width direction, and a connection wire portion 40 which connects the first wire portion 38 and the second wire portion 39 to each other in the width direction. The first wire portion 38 and the second wire portion 39 are bilaterally symmetrical shape and arrangement, and are both formed in a substantial U-shape in the side view in this embodiment. The connection wire portion 40 is located at the front side of the first wire portion 38 and the second wire portion 39, and connects the front ends of the first wire portion 38 and the second wire portion 39 to each other.

The first wire portion 38 is used to lock the end (the left end) of the trim cover located at one end side in the width direction of the seat when the trim cover 7 is attached to the seat cushion frame 14. The trim code 8a which is provided at the left end of the trim cover 7 so as to serve as a hook is hooked to the first wire portion 38. Specifically, the trim code 8a having a substantial J-shape is sewn to the left end of the trim cover 7, and the trim code 8a is hooked to the first wire portion 38, so that the left end of the trim cover 7 is locked to the seat cushion frame 14.

The structure of the first wire portion 38 will be described. As illustrated in Fig. 6, the first wire portion includes L-shaped portions 38a which are provided at the front end and the rear end thereof and a first hook portion 38b which is located at the center portion thereof in the front to back direction. Each L-shaped portion 38a is a portion which is formed so as to fix the first wire portion 38 to the seat cushion frame 14, and is welded to the left end frame 34 of the seat cushion frame 14 in this embodiment.

Specifically, the L-shaped portion 38a which is located at the front end side in the front to back direction of the seat 1 is provided at a position equal to the front brackets 32 and 32 (precisely, the left front bracket 32), and the L-shaped portion 38a which is provided at the rear end side thereof is provided at a position equal to the rear end of the left end frame 34 (more precisely, a portion adjacent to the rear bracket 33).

Then, each of the L-shaped portions 38a located at the front end and the rear end is formed by two segments perpendicular to each other. As illustrated in Fig. 6, one segment is welded to the inner surface of the left end frame 34 of the seat cushion frame 14, and the other segment extends inward (that is, toward the right end frame 35). Here, the inner surface of the left end frame 34 corresponds to a region facing the right end frame 35 in the left end frame 34.

The first hook portion 38b is a portion to which the trim code 8a sewn to the left end of the trim cover 7 is hooked in the first wire portion 38, is located at the inside of the left end frame 34, and extends in the front to back direction of the seat 1.

Further, the first hook portion 38b according to this embodiment is located slightly below the connection wire portion 40 while the seat 1 is attached to the main vehicle body in a regular posture (particularly, in a state where the seat cushion 4 is located at the stowing position). More specifically, as illustrated in Fig. 4, the first hook portion is exposed while being located below the left end frame 34. As a result, the trim code 8a may easily access the first hook portion 38b when the trim code is hooked to the first hook portion 38b compared to the case where the first hook portion 38b is provided at the same position as the connection wire portion 40 in the up and down direction, and hence the trim code 8a may be more easily hooked.

The second wire portion 39 is provided at a position separated from the first wire portion 38 (more specifically, a position located in parallel to the first wire portion 38 with a gap therebetween) in the width direction of the seat 1, and is used to lock the end (the right end) of the trim cover located at the other end side in the width direction of the seat when the trim cover 7 is attached to the seat cushion frame 14. The trim code 8b which is provided at the right end of the trim cover 7 is hooked to the second wire portion 39 as the other hook. Specifically, the trim code 8b having a substantial J-shape is sewn to the right end of the trim cover 7, and the trim code 8b is hooked to the second wire portion 39, so that the right end of the trim cover 7 is locked to the seat cushion frame 14.

The structure of the second wire portion 39 will be described. As illustrated in Fig. 6, the second wire portion is bilaterally symmetrical to the first wire portion 38. That is, as in the first wire portion 38, the second wire portion includes L-shaped portions 39a which are provided at the front end and the rear end thereof and a second hook portion 39b which is located at the center portion thereof in the front to back direction. Further, even each L-shaped portion 39a is formed by two segments perpendicular to each other as illustrated in Fig. 6, one segment is welded to the inner surface of the right end frame 35 of the seat cushion frame 14, and the other segment extends inward (that is, toward the left end frame 34). Here, the inner surface of the right end frame 35 corresponds to a region facing the left end frame 34 in the right end frame 35.

The second hook portion 39b in the second wire portion 39 is a portion to which the trim code 8b sewn to the right end of the trim cover 7 is hooked, is located at the inside of the right end frame 35, and extends in the front to back direction of the seat 1. Then, as in the first hook portion 38b, even the second hook portion 39b is located slightly below the connection wire portion 40 while the seat 1 is attached to the main vehicle body in a regular posture. That is, in this embodiment, the second hook portion 39b is exposed while being located below the right end frame 35. As a result, the trim code 8b may easily access the second hook portion 39b when the trim code is hooked to the second hook portion 39b compared to the case where the second hook portion 39b is provided at the same position as the connection wire portion 40 in the up and down direction, and hence the trim code 8b may be more easily hooked.

The connection wire portion 40 is provided to connect the first wire portion 38 and the second wire portion 39 to each other, and is provided from the inner surface of the left end frame 34 to the inner surface of the right end frame 35 in the width direction of the seat 1 in this embodiment. Since the connection wire portion 40 is provided, the rigidity for both the first wire portion 38 and the second wire portion 39 is improved. As a result, the first wire portion 38 and the second wire portion 39 are not easily deformed respectively even when the trim codes 8a and 8b are hooked thereto, and hence the state where the trim codes 8a and 8b are hooked may be satisfactorily maintained. That is, since the first wire portion 38 and the second wire portion 39 are connected to each other by the connection wire portion 40 in this embodiment, the trim cover 7 may be appropriately attached, and hence the quality (commodity) of the seat 1 may be improved.

Furthermore, in this embodiment, the connection wire portion 40 connects a portion other than the first hook portion 38b in the first wire portion 38 to a portion other than the second hook portion 39b in the second wire portion 39. As a result, it is possible to suppress the interference (the contact of a hand) with respect to the connection wire portion 40 when the trim codes 8a or 8b is hooked to the first wire portion 38 or the second wire portion 39, and hence to improve the workability.

More specifically, the connection wire portion 40 connects the L-shaped portion 38a (precisely, the tip of the segment welded to the left end frame 34) located at the front end side of the first wire portion 38 to the L-shaped portion 39a (precisely, the tip of the segment welded to the right end frame 35) located at the front end side of the second wire portion 39. Here, the L-shaped portion 38a located at the front end side of the first wire portion 38 corresponds to the first welding portion welded to the left end frame 34, and the L-shaped portion 39a located at the front end side of the second wire portion 39 corresponds to the second welding portion welded to the right end frame 35. That is, in this embodiment, the connection wire portion 40 connects the portions welded to the seat cushion frame 14 in the first wire portion 38 and the second wire portion 39 to each other. Accordingly, since the rigidity of the periphery of the welding portion is improved, the first wire portion 38 and the second wire portion 39 may be satisfactorily supported respectively by the corresponding side frames among the left end frame 34 and the right end frame 35.

Further, in this embodiment, as described above, the L-shaped portion 38a located at the front end side of the first wire portion 38 is welded to the inner surface of the left end frame 34, and the L-shaped portion 39a located at the front end side of the second wire portion 39 is welded to the inner surface of the right end frame 35. That is, since the above-described first welding portion and the above-described second welding portion are located at the inside of the corresponding side frames among the left end frame 34 and the right end frame 35 in this embodiment, the distance between the first welding portion and the second welding portion is shortened compared to the case where the first and second welding portions are located at the outside of the side frames. Then, since the length of the connection wire portion 40 may be shortened by the shortened distance, it is possible to realize a decrease in size and cost of the seat.

### «Other Embodiments»

In the above-described embodiment, a specific example (that is, the seat 1) of the vehicle seat of the present invention has been described. However, the above-described embodiment is used to easily understand the present invention, and does not limit the present invention. The present invention may be modified and improved without departing from the spirit, and the present invention, of course, includes the equivalent thereof. Further, the materials, the arrangement positions, the shapes, and the like of the above-described components are merely examples for obtaining the effect of the present invention, and do not limit the present invention.

In the above-described embodiment, the skin material attachment portion which is formed to attach the trim cover 7 has been described by exemplifying the trim cover 7 covering the cushion material 5 of the seat cushion 4 as an example of the skin material. However, the present invention may be also applied to the case where the other skin material is attached. For example, the present invention may be also applied to the case where the trim cover for covering the cushion material of the seat back 6 is attached.

### Reference Signs List

- 1: seat
- 2: support bracket
- 2a: flared portion
- 2b: base wall
- 3: connection pipe
- 4: seat cushion
- 5: cushion material
- 6: seat back
- 7: trim cover
- 8a, 8b: trim code
- 9: S-shaped spring
- 11: front end
- 12: rear end
- 13: intermediate portion
- 14: seat cushion frame
- 16: seat back frame
- 17: seat back frame base
- 18: side frame
- 18a: flared portion
- 18b: bulge portion
- 19: back pan frame
- 20: fixed pivot
- 21: rotation arm
- 31: seat cushion frame base
- 32: front bracket
- 32a: bulge portion
- 33: rear bracket
- 34: left end frame
- 35: right end frame
- 36: seat cushion pan
- 37: attachment wire
- 38: first wire portion
- 38a: L-shaped portion
- 38b: first hook portion
- 39: second wire portion
- 39a: L-shaped portion
- 39b: second hook portion
- 40: connection wire portion
- 41: connection bracket

## Claims

1. A vehicle seat comprising:
a skin material that covers a cushion material; and
a frame that includes a skin material attachment portion formed to attach the skin material thereto,
wherein the skin material attachment portion includes
a first wire portion to which a hook provided in the skin material is hooked when the skin material is attached to the skin material attachment portion,
a second wire portion which is located at a position separated from the first wire portion in a width direction of the vehicle seat and to which the other hook provided in the skin material is hooked when the skin material is attached to the skin material attachment portion, and
a connection wire portion that connects the first wire portion and the second wire portion to each other in the width direction.

2. The vehicle seat according to claim 1, wherein the connection wire portion connects a portion other than a first hook portion to which the hook is hooked in the first wire portion to a portion other than a second hook portion to which the other hook is hooked in the second wire portion.

3. The vehicle seat according to claim 1 or 2,
wherein the frame includes a pair of side frames that is disposed while being separated from each other in the width direction,
wherein the first wire portion is welded to one side frame of the pair of side frames,
wherein the second wire portion is welded to other side frame of the pair of side frames, and
wherein the connection wire portion connects a first welding portion welded to the one side frame in the first wire portion to a second welding portion welded to the other side frame in the second wire portion.

4. The vehicle seat according to claim 3,
wherein the first welding portion is located at a region facing the other side frame in the one side frame in the width direction, and
wherein the second welding portion is located at a region facing the one side frame in the other side frame in the width direction.

5. The vehicle seat according to any one of claims 1 to 4, wherein in a state where the vehicle seat is attached to a main vehicle body, a first hook portion to which the hook is hooked in the first wire portion and a second hook portion to which the other hook is hooked in the second wire portion are located below the connection wire portion.
